Europäisches Patentamt

European Patent Office

Office européen des brevets

(19)

(11) **EP 1 481 727 A2**

(12) **EUROPEAN PATENT APPLICATION**

(43) Date of publication:
01.12.2004 Bulletin 2004/49

(51) Int Cl.7: **B01J 19/00**, G01N 21/25

(21) Application number: **04253114.5**

(22) Date of filing: **27.05.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **30.05.2003 US 449175**

(71) Applicant: **Agilent Technologies Inc
Palo Alto, CA 94306-2024 (US)**

(72) Inventor: **Le Cocq, Christian A.
Menlo Park, CA 94025 (US)**

(74) Representative: **Tollett, Ian et al
Williams Powell
Morley House
26-30 Holborn Viaduct
London EC1A 2BP (GB)**

(54) **Feature extraction methods and systems**

(57)    Systems, methods and recordable media for fast, automatic grid finding of microarrays (110), based on reducing the dimensionality of the image data, by projecting the intensity values of the two-dimensional array in a first of the two dimensions to form a one dimensional dataset which is peak picked, and further processed to estimate the spacing between features. The steps are repeated for the second of the two dimensions to generate coordinates for the features on the array relative to X and Y axes.

Fig. 1B

EP 1 481 727 A2

**Description**

The present invention relates to a method, system, and computer readable medium for determining the layout of features on a microarray. More particularly, the present invention relates to automatically locating features on the microarray to be observed by a user.

Pharmaceutical, biotechnology, or genomics companies use polynucleotide arrays (such as DNA or RNA arrays), for example, as diagnostic or screening tools. Such arrays or microarrays include regions (sometimes referenced as spots or features) of usually different sequence polynucleotides arranged in a predetermined configuration on a substrate such as a microchip. The arrays, when exposed to a sample, will exhibit a binding pattern. This binding pattern can be observed, for example, by labeling all polynucleotide targets (for example, DNA) in the sample with a suitable label (such as a fluorescent compound), and accurately observing the fluorescent signal on the array. Assuming that the different sequence polynucleotides were correctly deposited in accordance with the predetermined configuration, then the observed binding pattern will be indicative of the presence and/or concentration of one or more polynucleotide components of the sample.

Biopolymer arrays can be fabricated using either in situ synthesis methods or deposition of the previously obtained biopolymers. The deposition methods basically involve depositing biopolymers at predetermined locations on a substrate which are suitably activated such that the biopolymers can link thereto. Biopolymers of different sequence may be deposited at different regions of the substrate to yield the completed array. Washing or other additional steps may also be used. Procedures known in the art for deposition of polynucleotides, particularly DNA such as whole oligomers or cDNA, include touching drop dispensers to a substrate or use of an ink jet type head to fire drops onto the substrate.

A scanner is then used to read the fluorescence of these resultant surface bound molecules under illumination with suitable (most often laser) light. The scanner acts like a large field fluorescence microscope in which the fluorescent pattern caused by binding of labeled molecules is scanned on the chip. In particular, a laser induced fluorescence scanner provides for analyzing large numbers of different target molecules of interest, e.g., genes/mutations/ alleles, in a biological sample.

The scanning equipment typically used for the evaluation of microarrays includes a scanning fluorometer. A number of different types of such devices are commercially available from different sources, such as Axon Instruments in Union City, California; Perkin Elmer of Wellesly, Massachusetts; and Agilent Technologies, Inc. of Palo Alto, California. Analysis of the data, (i.e., collection, reconstruction of image, comparison and interpretation of data) is performed with associated computer systems and commercially available software, such as GenePix by Axon Instruments, QuantArray by Perkin Elmer or Feature Extraction by Agilent of Palo Alto, CA.

In such scanning devices, a laser light source generates a "most often collimated" beam. The collimated beam sequentially illuminates small surface regions of known locations on an array substrate. The resulting fluorescence signals from the surface regions are collected either confocally (employing the same lens used to focus the laser light onto the array) and/or off-axis (using a separate lens positioned to one side of the lens used to focus the laser onto the array). The collected signals are then transmitted through appropriate spectral filters to an optical detector. A recording device, such as a computer memory, records the detected signals and builds up a raster scan file of intensities as a function of position, or time as it relates to the position. Such intensities, as a function of position, are typically referred to in the art as "pixels" or "pixel values." Collectively, the pixels make up a microarray scan image having a multiplicity of feature cells, wherein each feature cell is comprised of a group of pixels.

In array fabrication, the quantities of DNA available for the array are usually very small and expensive. Sample quantities available for testing are usually also very small and it is therefore desirable to simultaneously test the same sample against a large number of different probes on an array. These conditions require use of arrays with large numbers of very small, closely spaced spots.

The use of microarray technologies to conduct experiments that measure thousands of genes and proteins simultaneously and under different conditions are becoming the norm in both academia and pharmaceutical/biotech companies. Microarray technology is leading to greater feature density as well as to extremely high-resolution scanning. In their largest capacities, such as in a full human genome catalog array, there may be as many as three or four 25,000 to 50,000-feature cells. This results in increasingly large amounts of both image and feature analysis data which can be problematic for several reasons. First the higher the density of features on an array, the increasingly more difficult it becomes to accurately extract these features. Higher accuracy and precision of the scanning apparatus becomes necessary. Even more importantly, higher accuracy and precision of the manufacturing techniques, preparation techniques, and associated apparatus are required, so that at the user end, the user can located the information to be read and distinguish it from noise.

Currently, arrays from different sources and/or manufacturers vary greatly in quality. Layouts of the pixels may vary, as array formats are not standardized. In the early period of microarray analysis, microarrays were arranged in a single, rectangular matrix of dots or features. Currently, however, there are a multitude of layouts, including microarrays having a plurality of subarrays formed on a single chip, where each subarray is made up of a rectangular matrix of dots or features, and each subarray is spaced or separated from the other subarrays. These spacings may be due to the arrangement of pens used to deposit the features, wherein the pens are spaced far apart and a collection of all the dots (features) made by each single pen is what constitutes each subgrid. In this way, with each pass of a pen matrix, a single feature is added to each subgrid.

Further variations in microarray patterns occur due to poor quality or errors in the application of the features to the chip. Ideally, when the features are dots, each should be well-formed (e.g., a substantially perfect circle) and uniformly spaced. With the wide variation of manufacturers now available, however, the features are not always so homogeneous. For example, "doughnuts" (i.e., a dot only filled circumferentially along the perimeter, with a blank or hole in the center) may be formed in some instances, rather than a fully filled circle. Other partially formed or misformed features or manufacturing may also occur, such as crescent-shaped features; irregular boundaries (perimeters) of the features; misaligned rows or columns of features; misalignment between consecutive features, along a row and/ or a column; variations in the size or circumferences of the dots; and others.

Still other error factors may exist on microarrays which make accurate interpretation of the data more difficult. These include dust (such as that existing during or after preparation of the microarray); gasket marks, which may leave high intensity noise on the array, drying stains, scratches, spots or spurious pixels or the like.

Currently, users who examine microarrays of a variety of array designs from different origins typically spend between several minutes up to an hour to adapt their feature extraction programs to each array scan and especially each time the array layout changes, or when the quality of an array is substandard.

For all of the above reasons, a universal system for feature extraction and method of feature extraction is needed to shorten the time that is required by the user to begin viewing the actual data contained on a microarray.

The present invention provides systems, methods and computer readable media for determining a layout of features on a microarray that are provided in a two-dimensional array, the two dimensions being referenced to X and Y axes. The present invention reduces the two dimensional image data of the array to two one-dimensional data sets which are further processed to determine the layout of the grid (microarray). Projection of the two dimensional array is performed to produce the one-dimensional datasets (projections). The one dimensional datasets may be peak picked to determine which peaks to retain for further processing, based on predetermined peak height and peak width thresholds. Spacing between the features may be estimated based on a statistical determination of a most frequent distance between centers of retained peaks which are adjacent one another. Coordinates for the features on the array, relative to the X and Y axes, may be generated based on the picked peaks and peak spacing.

The present invention further provides systems, methods and recordable media for block finding from the sets of picked peaks, to determine layouts of subgrids of features on the microarray.

Further, block sizes may be computed according to the present invention, based on a block size that accounts for the most number of picked peaks with blocks determined by the block finding processing. Block fixing may also be carried out to filter out spurious noises or account for missing features so as to fit a nonconforming block size with the computed block size.

One or more smoothing functions may be applied to one or more of the projections to filter out minor points having a higher frequency than the peaks representing features.

Peak picking according to the present invention may include analyzing an interval around each local maximum in each projection, fitting a Gaussian curve in each interval, based on the interval and the local maximum, and finding a peak center of the interval, based on the local maximum value and the Gaussian curve, using a centering algorithm, and statistically processing the Gaussian curves to filter out those curves most likely to be representative of noise. The statistical processing may include processing the curves for width and area, and discarding curves which have a statistically significant variation from an average width or average area.

The average width and average area values used may be a median curve width and a median area. Curves which have an area that is less than the median area by more than a predetermined amount may be discarded. Curves which have a width which is greater than the median width by more than a predetermined amount may be discarded.

The present invention further includes non-linear projecting. Non-linear projecting may include reducing the projected feature sizes using a window function. Additionally, logarithmic values of the reduced, features sizes may be projected under non-linear projecting.

Further projection may be performed as projecting based on orthogonal projection previously performed along the opposite axis. Alternate iterations of projections based on orthogonal projection may be performed.

Projections may be performed in the first and second dimensions with respect to two distinct portions of the features on a microarray to determine rotation or skew. In these procedures, positions of features in both of the two distinct portions are located, and compared to one another to determine offset between features from the first portion as compared to the second. From this offset, a rotation of the layout of the features with respect to one of the X and Y axes may be calculated.

The calculated rotation may be subtracted from the dataset, such as by applying the offset due to the rotation to each X and Y coordinate over which the rotation has been discovered, after which the projections with respect to the two distinct portions of the features on the microarray may be performed again. Again, offset between features is measured, and a rotation may be calculated therefrom, from which skew of the features may be determined.

Baseline processing of the projections is further provided by the present invention. Baseline processing may include applying a window function to each projection to identify minimum values within a window of the window function as it is passed over the projection plot; plotting the minimum values; applying the window function to the minimum values plot to identify maximum values within the window as it is passed over the minimum values plot; and subtracting the maximum values from the projection plot. Zero rank filtering is one example of baseline processing provided.

The present invention further covers forwarding a result obtained from any and all of the methods and techniques described herein, to a remote location; transmitting data representing a result obtained from any and all of the methods and techniques described herein, to a remote location; and/or receiving a result obtained from any and all of the methods and techniques described herein, from a remote location.

These and other advantages and features of the invention will become apparent to those persons skilled in the art upon reading the details of a number of preferred embodiments of the systems and methods of the present invention as more fully described below, with reference to the drawings, in which-

## BRIEF DESCRIPTION OF THE DRAWINGS

Fig. 1A shows a schematic representation of a slide containing an array arranged as subarrays.

Fig. 1B schematically shows a vector resultant from summing the pixels of the slide of Fig. 1A in the X direction.

Fig. 1C schematically shows a vector resultant from summing the pixels of the slide of Fig. 1A in the Y direction.

Fig. 2A shows actual data constructed from the projection of data on a microarray slide in the Y direction.

Fig. 2B shows the data of Fig. 2A, after processing in accordance with the techniques of the present invention.

Fig. 3 illustrates the fitting of a Gaussian curve within an identified peak.

Fig. 4A schematically shows an alignment of peaks and the spacings therebetween which are used by the present invention to determine peak spacing for the grid.

Fig. 4B schematically shows an alignment of peaks and the use of the determined peak spacing to determine group spacing.

Fig. 5 shows a simplified, exaggerated example of a grid having a first subgrid which has been deposited on the slide such that it is rotated with respect to the X and Y axes of the grid, and a second subgrid which is well aligned with the axes.

Figs. 6A, 6B and 6C illustrate an example of the use of a window function to reduce the sizes of the peaks identified as representative of features.

Figs. 6D and 6E compare a peak as filtered by the window function, with a peak which has not been so filtered.

Fig. 7 schematically shows another example of a rotated data pattern on a grid, wherein both subgrids shown are rotated with respect to the grid.

Fig. 8A schematically shows a projection, as it appears prior to baseline filtering, in comparison with a projection plot having a perfect baseline.

Fig. 8B schematically shows the unfiltered projection plot of Fig. 8A, as well as plots generated during baseline filtering superimposed thereon.

Fig. 9A schematically shows a plot of peak groupings in which one of the groups presents with a peak missing.

Fig. 9B schematically shows a plot of peak groupings in which an anomalous peak makes two groups appear as one large grouping.

Fig. 9C shows the plot of Fig. 9B after processing according to the present invention, wherein the large grouping has been broken down into two proper sized groupings.

Before the present systems and methods are described, it is to be understood that this invention is not limited to particular methods, method steps, algorithms, software or hardware described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed within the invention. The upper and lower limits of these smaller ranges may independently be included or excluded in the range, and each range where either, neither or both limits are included in the smaller ranges is also encompassed within the invention, subject to any specifically excluded limit in the stated range. Where the stated range includes one or both of the limits, ranges excluding either or both of those included limits are also included in the invention.

Unless defined otherwise, all technical and scientific terms used herein have the same meaning as commonly understood by one of ordinary skill in the art to which this invention belongs. Although any methods and materials similar or equivalent to those described herein can be used in the practice or testing of the present invention, the preferred methods and materials are now described. All publications mentioned herein are incorporated herein by reference to disclose and describe the methods and/or materials in connection with which the publications are cited.

It must be noted that as used herein and in the appended claims, the singular forms "a", "and", and "the" include plural referents unless the context clearly dictates otherwise. Thus, for example, reference to "a pixel" includes a plurality of such pixels cells and reference to "the row" includes reference to one or more rows and equivalents thereof known to those skilled in the art, and so forth.

The publications discussed herein are provided solely for their disclosure prior to the filing date of the present application. Nothing herein is to be construed as an admission that the present invention is not entitled to antedate such publication by virtue of prior invention. Further, the dates of publication provided may be different from the actual publication dates which may need to be independently confirmed.

## DEFINITIONS

In the present application, unless a contrary intention appears, the following terms refer to the indicated characteristics.

"Projecting" or "projection" of a two dimensional image onto a one dimensional line refers to adding all the values or selected values within the same row or column index of a matrix to yield a one-dimensional dataset with the same length as one of the dimensions of the matrix or the length of the matrix taking into account the selected values, i.e. number of rows or number of columns. "Simple projection" may be performed without any image rotation or additional image processing. Simple projection works well when the features are well aligned and well-formed, as a line of such features along the projection direction will form a sharp peak on the projection. Because simple projection is linear, its result is dominated by large intensity signals on the image being projected, regardless of whether the large intensity signals are caused by features or spurious pixels (e.g., scratches, drying traces, gasket traces, etc.) Further, the projection of a doughnut shaped feature will appear as a double peak, separated by the inner diameter (i.e., "doughnut hole") of the doughnut shaped feature. If the features are poorly separated, or if the rows and columns of the grid are not exactly aligned along the rows and columns of the image, the projection will appear blurred, as the expected peaks will bleed into those formed by neighboring features.

"Non-linear projecting" or "non-linear projection" is the same as "projecting" or "projection", except that preprocessing is done before the projection. Such preprocessing may include computing local minima or maxima, taking the logarithm of the local minima or maxima, computing projections along rotated axes as needed, and/or dithering sums over the one-dimensional data set.

"Projecting based on orthogonal projection" includes any of the above projection techniques wherein the row or columns that are summed are only those that are near a local maximum in the other dimension (row or column). Typically, only the middle half (or some other predefined central portion) of those maxima are considered.

"Gauss filtering", "Gaussian Filtering" or "Gaussian Integration" involves a classical application of a correlation with a Gauss kernel.

"Large trace removing" involves addressing and filtering artifacts caused by gasket traces, drying traces, or other large artifacts on the slide/chip which, if not treated, tend to show up as very bright, large areas when viewed.

"Zero rank filtering" involves removing the local baseline under the one-dimensional data after it has been projected.

"Peak picking" a one-dimensional dataset involves finding all the local maxima, and further processing the local maxima to determine which are features to be kept for data interpretation.

"Spacing estimation" involves the computation of the most frequent distance between adjacent peak centers.

"Peak height selection" involves statistical processing to weed out peaks that are created by image artifacts.

"Block finding" involves forming groups of peaks from the total population, based on sets which are generally equally spaced according to a given or measured spacing. Blocks are intended to define subarrays, subgrids or zones in a microarray.

"Block size computing" involves computing to choose the block size that involves the maximum number of peaks, after peak picking has been performed.

"Block fixing" attempts to force a given block size on blocks that are either smaller or larger than the computed block size.

A "biopolymer" is a polymer of one or more types of repeating units. Biopolymers are typically found in biological systems and particularly include polysaccharides (such as carbohydrates), and peptides (which term is used to include polypeptides and proteins) and polynucleotides as well as their analogs such as those compounds composed of or containing amino acid analogs or non-amino acid groups, or nucleotide analogs or non-nucleotide groups. This includes polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions. Polynucleotides include single or multiple stranded configurations, where one or more of the strands may or may not be completely aligned with another.

A "nucleotide" refers to a sub-unit of a nucleic acid and has a phosphate group, a 5 carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides.. For example, a "biopolymer" includes DNA (including cDNA), RNA, oligonucleotides, and PNA and other polynucleotides as described in US 5,948,902 and references cited therein (all of which are incorporated herein by reference), regardless of the source. An "oligonucleotide" generally refers to a nucleotide multimer of about 10 to 100 nucleotides in length, while a "polynucleotide" includes a nucleotide multimer having any number of nucleotides. A "biomonomer" references a single unit, which can be linked with the same or other biomonomers to form a biopolymer (for example, a single amino acid or nucleotide with two linking groups one or both of which may have removable protecting groups).

When one item is indicated as being "remote" from another, this is referenced that the two items are at least in different buildings, and may be at least one mile, ten miles, or at least one hundred miles apart.

"Communicating" information references transmitting the data representing that information as electrical signals over a suitable communication channel (for example, a private or public network). "Forwarding" an item refers to any means of getting that item from one location to the next, whether by physically transporting that item or otherwise (where that is possible) and includes, at least in the case of data, physically transporting a medium carrying the data or communicating the data.

A "processor" references any hardware and/or software combination which will perform the functions required of it. For example, any processor herein may be a programmable digital microprocessor such as available in the form of a mainframe, server, or personal computer (desktop or portable). Where the processor is programmable, suitable programming can be communicated from a remote location to the processor, or previously saved in a computer program product (such as a portable or fixed computer readable storage medium, whether magnetic, optical or solid state device based). For example, a magnetic or optical disk may carry the programming, and can be read by a suitable disk reader communicating with each processor at its corresponding station.

Reference to a singular item, includes the possibility that there are plural of the same items present.

"May" means optionally.

Methods recited herein may be carried out in any order of the recited events which is logically possible, as well as the recited order of events.

An "array", "microarray" or "bioarray" unless a contrary intention appears, includes any one-, two- or three-dimensional arrangement of addressable regions bearing a particular chemical moiety or moieties (for example, biopolymers such as polynucleotide sequences) associated with that region. An array is "addressable" in that it has multiple regions of different moieties (for example, different polynucleotide sequences) such that a region (a "feature" or "spot" of the array) at a particular predetermined location (an "address") on the array will detect a particular target or class of targets (although a feature may incidentally detect non-targets of that feature). Array features are typically, but need not be, separated by intervening spaces. In the case of an array, the "target" will be referenced as a moiety in a mobile phase (typically fluid), to be detected by probes ("target probes") which are bound to the substrate at the various regions. However, either of the "target" or "target probes" may be the one which is to be evaluated by the other (thus, either one could be an unknown mixture of polynucleotides to be evaluated by binding with the other). An "array layout" refers to one or more characteristics of the features, such as feature positioning on the substrate, one or more feature dimensions, and an indication of a moiety at a given location. "Hybridizing" and "binding", with respect to polynucleotides, are used interchangeably. A "pulse jet" is a device which can dispense drops in the formation of an array. Pulse jets operate by delivering a pulse of pressure to liquid adjacent an outlet or orifice such that a drop will be dispensed therefrom (for example, by a piezoelectric or thermoelectric element positioned in a same chamber as the orifice).

A "subarray" or "subgrid" is a subset of an array. Typically, a number of subgrids are laid out on a single slide and are separated by a greater spacing than the spacing that separates features or spots or dots.

Any given substrate (e.g., slide) may carry one, two, four or more arrays disposed on a front surface of the substrate. Depending upon the use, any or all of the arrays may be the same or different from one another and each may contain multiple spots or features. A typical array may contain more than ten, more than one hundred, more than one thousand more ten thousand features, or even more than one hundred thousand features, in an area of less than 20 $cm^2$ or even less than 10 $cm^2$. For example, features may have widths (that is, diameter, for a round spot) in the range from a 10 µm to 1.0 cm. In other embodiments each feature may have a width in the range of 1.0 µm to 1.0 mm, usually 5.0 µm to 500 µm, and more usually 10 µm to 200 µm. Non-round features may have area ranges equivalent to that of circular features with the foregoing width (diameter) ranges. At least some, or all, of the features are of different compositions (for example, when any repeats of each feature composition are excluded the remaining features may account for at least 5%, 10%, or 20% of the total number of features).

Interfeature areas will typically (but not essentially) be present which do not carry any polynucleotide (or other biopolymer or chemical moiety of a type of which the features are composed). Such interfeature areas typically will be present where the arrays are formed by processes involving drop deposition of reagents but may not be present when, for example, photolithographic array fabrication processes are used, It will be appreciated though, that the interfeature areas, when present, could be of various sizes and configurations.

Each array may cover an area of less than 100 cm$^2$, or even less than 50 cm$^2$, 10 cm$^2$ or 1 cm$^2$. In many embodiments, the substrate carrying the one or more arrays will be shaped generally as a rectangular solid (although other shapes are possible; for example, some manufacturers are currently working on flexible substrates), having a length of more than 4 mm and less than 1 m, usually more than 4 mm and less than 600 mm, more usually less than 400 mm; a width of more than 4 mm and less than 1 m, usually less than 500 mm and more usually less than 400 mm; and a thickness of more than 0.01 mm and less than 5.0 mm, usually more than 0.1 mm and less than 2 mm and more usually more than 0.2 and less than 1 mm. With arrays that are read by detecting fluorescence, the substrate may be of a material that emits low fluorescence upon illumination with the excitation light. Additionally in this situation, the substrate may be relatively transparent to reduce the absorption of the incident illuminating laser light and subsequent heating if the focused laser beam travels too slowly over a region. For example, substrate 10 may transmit at least 20%, or 50% (or even at least 70%, 90%, or 95%), of the illuminating light incident on the front as may be measured across the entire integrated spectrum of such illuminating light or alternatively at 532 nm or 633 nm.

Arrays can be fabricated using drop deposition from pulse jets of either polynucleotide precursor units (such as monomers) in the case of *in situ* fabrication, or the previously obtained polynucleotide. Such methods are described in detail in, for example, the previously cited references including US 6,242,266, US 6,232,072, US 6,180,351, US 6,171,797, US 6,323,043, U.S. Patent Application Serial No. 09/302,898 filed April 30, 1999 by Caren et al., and the references cited therein. As already mentioned, these references are incorporated herein by reference. Other drop deposition methods can be used for fabrication, as previously described herein. Also, instead of drop deposition methods, photolithographic array fabrication methods may be used. Interfeature areas need not be present particularly when the arrays are made by photolithographic methods.

Following receipt by a user of an array made by an array manufacturer, it will typically be exposed to a sample (for example, a fluorescently labeled polynucleotide or protein containing sample) and the array then read. Reading of the array may be accomplished by illuminating the array and reading the location and intensity of resulting fluorescence at multiple regions on each feature of the array,. For example, a scanner may be used for this purpose which is similar to the AGILENT MICROARRAY SCANNER manufactured by Agilent Technologies, Palo Alto, CA. Other suitable apparatus and methods are described in U.S. Patents 6,406,849, 6,371,370, and U.S. patent applications: Serial No. 10/087447 "Reading Dry Chemical Arrays Through The Substrate" by Corson et al., and Serial No. 09/846125 "Reading Multi-Featured Arrays" by Dorsel et al.. However, arrays may be read by any other method or apparatus than the foregoing, with other reading methods including other optical techniques (for example, detecting chemiluminescent or electroluminescent labels) or electrical techniques (where each feature is provided with an electrode to detect hybridization at that feature in a manner disclosed in US 6,251,685, US 6,221,583 and elsewhere). A result obtained from the reading followed by a method of the present invention may be used in that form or may be further processed to generate a result such as that obtained by forming conclusions based on the pattern read from the array (such as whether or not a particular target sequence may have been present in the sample, or whether or not a pattern indicates a particular condition of an organism from which the sample came). A result of the reading (whether further processed or not) may be forwarded (such as by communication) to a remote location if desired, and received there for further use (such as further processing).

When analyzing the results of experiments performed on a microarray, the interpretation of the data is facilitated when the slide on which the microarray is produced is of known origin and accompanied by complete detailed information that specifies the positions, spacing and all details of the pixels deposited to form the microarray. For example, detailed layout information may be provided to direct the analysis to the exact positions of the dots or pixels making up the array, including spacings of microarrays, when present. An example of such layout information is that contained in a GAL (GenePix Array Layout) file (GenePix, of Union City, California), or an Agilent design file (Agilent, Palo Alto, California)

However, on many occasions, incomplete information (or no information at all) is available to assist in viewing a microarray. For example, the GAL file, even if provided, may be incomplete and not include "x" and "y" coordinates of the pixels on the slide. Alternatively, only a text file may be provided which includes a list of all the names of the genes being experimented on, possibly with an assigned order, such as the column and row that each gene appears in, for example, possibly also with a subgrid number, but with no "x" and "y" coordinates given, or spacing between pixels, or spacing between subgrids. In the worst case, there may be no information accompanying a microarray that needs to be viewed.

Since, as noted above, arrays from different sources and/or manufacturers vary greatly in quality and layouts of the pixels may vary, as array formats are not standardized, the present invention provides means for identifying the grid upon which a microarray has been formed, and identifying the features to be examined, as well as identifying spurious information which is to be disregarded.

A goal, when examining a slide containing microarray data, is to locate the layout of the information contained on the slide, i.e., the "dots", "spots" or "features" as they are arranged and spaced on the slide, including whether they form a single array or grid, or a series of subarrays or subgrids. By identifying where the features reside, this makes it further possible to ignore or filter out other information which is not located where the features are.

An initial approach to locating the features on a grid aims to locate the centers of the features. To begin with, the slide containing the array is read to sum the rows and sum the columns of the array to create the projections of the two dimensional image formed by the slide along one dimensional lines. By condensing the data from a two dimensional image to two vectors of one dimensional data, this greatly reduces processing time, since the processing time required to process one dimensional data is the square root of the time for processing the two-dimensional image data.

If the dots or features are thought of as bumps or hills, the projection process according to the present invention endeavors to look in the plane of these features to determine the skyline or topography of the features. If there are a few missing features here or there, it doesn't matter to the projection, because there are enough present, so that statistically, all of the projections will have about the same height. Also, even if most of the spots are faint, the sum of all those values are going to be significantly higher than the background signal. This provides an additional advantage over two-dimensional processing because of the increased signal to noise ratio produced by summing the features.

By locating the centers of all the features (peaks which are determined to represent features) in one dimension, and the centers of all those peaks in the second dimension, the present invention identifies the grid of data represented as features on the microarray. By finding centers, this gives the "x" and "y" coordinates for each feature which are then used to identify the grid.

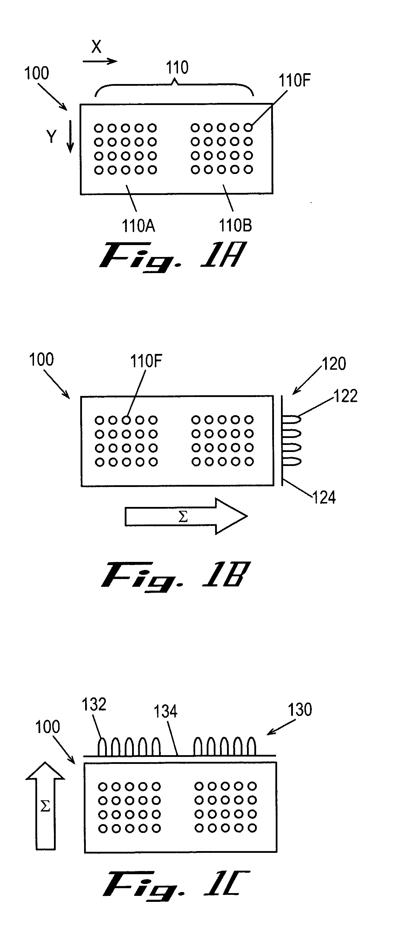

Fig. 1A shows a schematic representation of a slide 100 containing an array 110 arranged as subarrays 110A and 110B. Of course, this schematic representation is greatly simplified, as a typical array will contain many more features and may be arranged in a much greater number of subgrids (subarrays), but for purposes of illustration and explanation, the array size has been shown much smaller and only broken down into two subgrids 110A and 110B.

The convention used for the grid on slide 100 in Fig.1A and throughout this application is that the X-axis runs horizontally, from left to right, along the slide as shown in Fig. 1A, and the Y-axis runs vertically, from top to bottom, along the slide 100. To perform the projections, the sum of all the rows is performed and the sum of all the rows is performed. Thus, the projections in the X and Y directions are as follows:

Projection for X:

$$A(x) = \sum_{y} f(x, y) \qquad (1)$$

where

A(x) is the projection value for a full column of intensity values aligned along a given "x" pixel location; and
f(x,y) is the intensity of the illumination of the pixel at the given x and y coordinates.

Projection for Y:

$$B(y) = \sum_{x} f(x, y) \qquad (2)$$

where

B(x) is the projection value for a full row of intensity values aligned along a given "y" pixel location; and
f(x,y) is the intensity of the illumination of the pixel at the given x and y coordinates.

The result of performing the projections reduces the matrix of intensity values provided by the grid on slide 100 to two vectors of values. Fig. 1B schematically shows the vector 120 resultant from summing in the X direction, and Fig. 1C schematically shows the vector 130 resultant from summing in the Y direction. The bumps 122 and 132 represent the illumination peaks resultant from summing the high illumination areas where the features are located. The baselines 124, 134 represent spaces on the slide which are not occupied by features 110F. Of course, these schematic representations show idealized final results of processing, which are generally achieved after the further processing to be discussed hereafter. Upon forming the initial projections, however, the baselines 124, 134 are usually irregular and may contain peaks of their own which can be caused by any of the factors described above that cause illumination which is not representative of a feature.

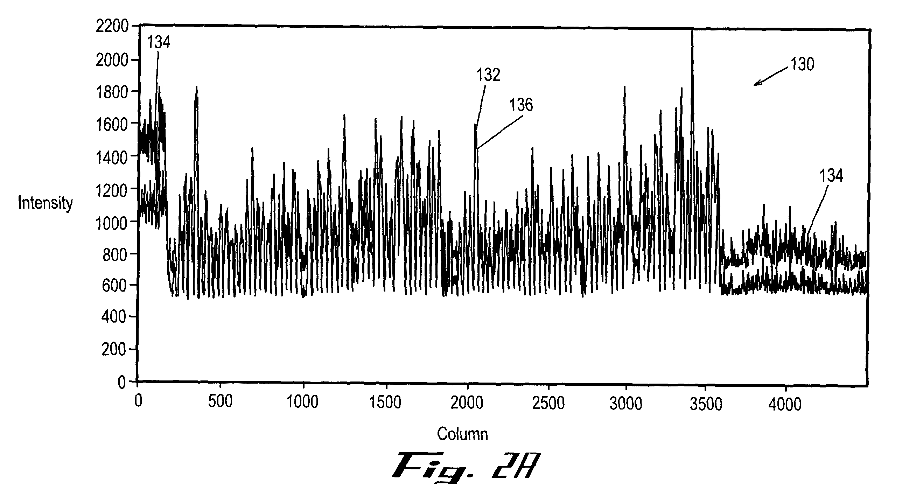

Fig. 2A shows actual data constructed from the projection of data on a microarray slide in the Y direction. It can be seen that the baseline 134 is erratic and shows some illumination, possibly caused by a gasket seal mark left on the slide. After making the projections, the data may be further processed, so that it may be more effective for use in determining the layout of the grid and/or subgrids and features. Fig. 2B shows the data of Fig. 2A, after processing in accordance with the techniques of the present invention. The projections are used to find which are the meaningful peaks which are representative of loci of the features. The center of these peaks is desirable to find since this increases the probability of locating the column or row coordinate. Baseline processing is done to filter the spurious sources of illumination and return the baseline much more closely to a constant line indicating little to no illumination.

A smoothing function may also be applied to the projection to get rid of the higher frequency minor points ("jitters") 136 which may be superimposed upon the major peaks. The smoothing of the peaks makes it easier to discern the actual peaks that are representative of the features. For example, a correlation with a Gaussian kernel that is a few points wide (typically three to 5 points wide, using 10 micron pixels or points) yields appropriate smoothing.

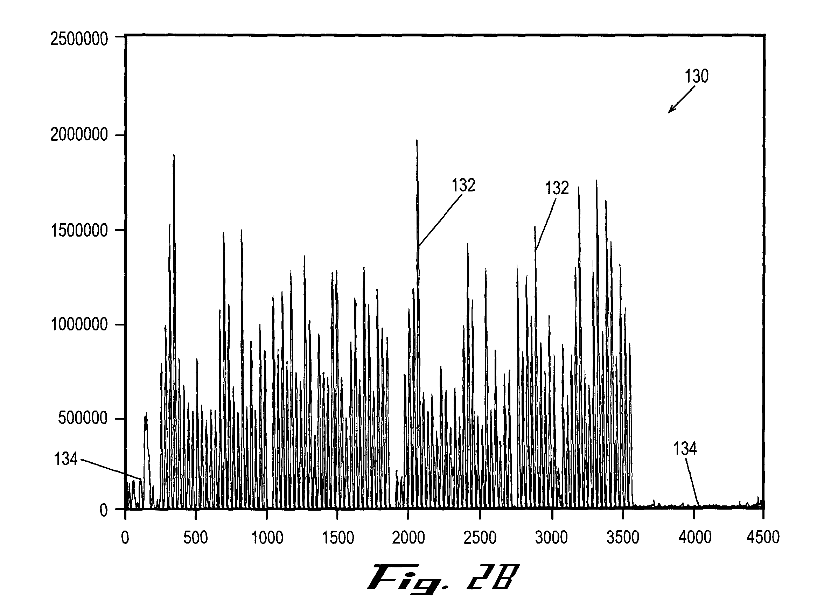

After smoothing the local maxima of the plots are determined. Then, an interval is taken around each local maximum, and A Gaussian curve is fitted in the interval. The center of the Gaussian 136, which may be different from the peak maximum 137, is found using a centering algorithm. Typically the centroid algorithm (i.e., where the center of gravity of the peak is computed) gives satisfactory results. Additionally, the area under the curve defined by the peak within the interval is calculated, as well as the peak width (half-width maximum) 138 (see Fig. 3). This reduces projection curves to a list of identified peaks, which is just two lists of numbers. This is important because it further reduces the number of points subjected to subsequent, more complicated processing, thereby reducing the time and cost of preparing an array to be observed by a user. For example, for a 6000 x 2000 pixel microarray, this gives twelve million data points to be processed. Projection processing reduces the number of data points to be processed to around eight thousand (six thousand plus two thousand, plus possibly some artifacts). By finding the peak centers, the number may be reduced to only a few hundred data points to be further processed (e.g., about 200-500 points).

Next the peak shapes are statistically processed in an effort to recognize and filter out the peaks which do not fit the shape of the general population (i.e., filter out the outliers) and which are therefore most likely to be representative of noise caused by artifacts, rather than illumination caused by features. Statistics may be done on the area, as well as width of the peaks, in an effort to filter out the peaks that do not fit the general population (i.e., to identify the outliers, which are most probably noise masquerading as peaks). The median value of the areas under the peaks and the median peak width are calculated, and peaks that have a significant variation from these median values are discarded from the set of peaks to be considered for viewing as features. Peaks that are determined to show a significant variation are those peaks that have an area that is more than a predetermined amount less that the median area (for example, twenty times smaller than the median area) as well as peaks whose width is more than a predetermined amount greater (e.g., at least about 50% greater) than the calculated median width.

It is not practical to attempt to identify peaks having a height that is significantly higher than the general population, because the data may be such that most of the features are very faintly illuminated, with one or a few being very intense. Of course, these very intense features are features which should be considered. Also, there is no need to remove peaks that are too narrow, because such peaks are also usually too small in area, so as to be effectively filtered by the median area filter.

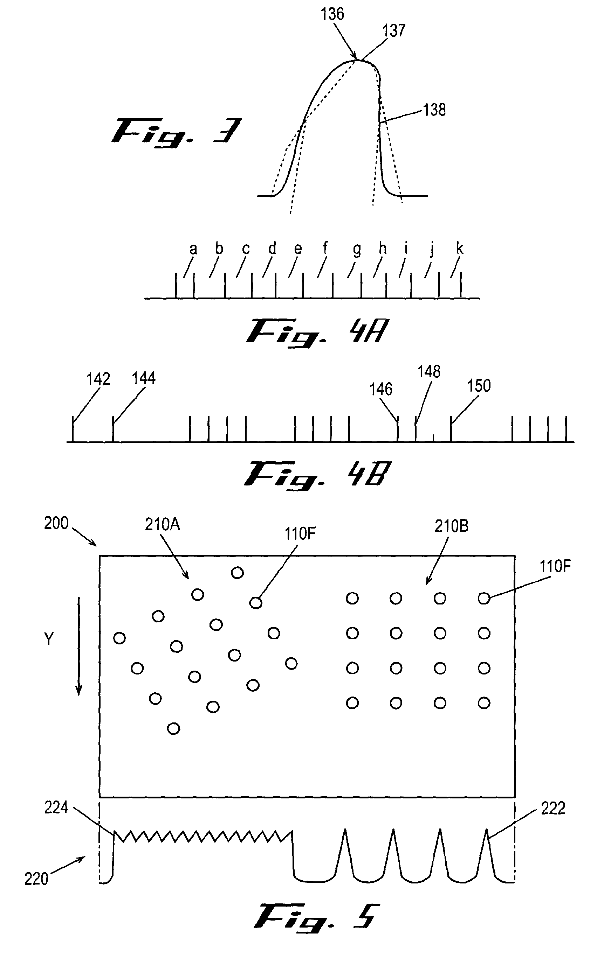

Next the system endeavors to find the spacing between peaks. The spaces between each pair of adjacent peaks are calculated and tabulated, after which, the median difference between adjacent peaks is calculated. The median value is then set to be the feature spacing, i.e. distance between adjacent features in the dimension being considered. Although the median is the preferred measure for determining peak spacing, it is noted that other statistical measurements could be substituted for peak spacing. For example, some other form of "average" calculation could be employed to determine peak spacing, although some approaches may not be as accurate, since the subgrid spacing distances will generally be calculated along with the interfeature distances. Using the median measure in Fig. 4A, as an example, if the spacing between the peaks shown in Fig. 4A is a, b, c, d, e, f, g, h, i, j and k, respectively, and if these spacing distances, arranged from smallest to largest spacing are: a, k, i, h, c, d, g, h, e, b, f; then the median spacing is d.

The peak spacing may be further used to determine group spacing, e.g., distance between subgrids of features. In the example shown in Fig. 4B, the groups show a general tendency to have four peaks per grouping. Although only four peaks per group are shown, this is for simplicity of explanation, as in practice, there are usually about 20 to 30 peaks per subgrid, with between 4 and 12 subgrids in one dimension, so spacings between subgrids don't effect the median all that much, when finding the median spacing. The system then analyzes the peak spacings to define groups. Spacings that fall within a predefined range about the median spacing (e.g., median spacing ± about 20%) are considered to be spacings between adjacent features. Peaks are clustered in groups according to these spacings. Then the groups are sorted by size (i.e., number of peaks per group), and the size which explains the majority of the groups (i.e., the number of those groups times the number of peaks in that group size) is deemed the subgrid size. Then the groups are sorted by position, and the average of the distances between adjacent groups of the determined group size is assigned as the subgrid spacing distance.

By the foregoing techniques, the system determines that the peaks shown in Fig. 4B include groupings of 1, 1, 4, 4, 2, 1 and 4 peaks, respectively. The system then chooses the grouping number that characterizes the majority of the peaks in the dataset to determine the number of peaks in a group or subgrid. For example, in Fig. 4B, three peaks are characterized as groupings of one peak, two peaks are characterized as groupings of two peaks, and twelve peaks are characterized as groupings of four peaks. From this the system concludes that the subgrids are characterized by groupings of four peaks each. Therefore, peaks 142 and 144 are considered to belong to a first subgrid, and peaks 146, 148 and 150 are considered to belong to a fourth subgrid in this example.

All of the preceding procedures may then be repeated in the second dimension to determine peaks and subgrid spacing in the other dimension. For example, if projection, etc. is performed in the X-direction first, then the procedures are repeated in the Y-direction, or vice versa.

] The projections are easiest to calculate when all of the features are well-formed and consistent, and the grid/subgrids are all aligned with each other as well as with the slide. However, in reality, many discrepancies from this ideal layout occur. For example, the entire grid may be rotated with respect to the X and/or Y axes. Additionally or alternatively, one or more subgrids may be rotated with respect to the other subgrids in the grid. Also, rows and/or columns of one or more subgrid may be misaligned with rows and/or columns of adjacent subgrids. Fig. 5 shows a simplified, exaggerated example in which subgrid 210A of grid 200 has been deposited on the slide such that it is rotated with respect to the X and Y axes of the grid. In comparison, subgrid 201B is well aligned with the axes. The projection plot 220, resultant from taking the projections along the Y axis, shows well formed peaks 222 with respect to subgrid 210B, since the features 110F are aligned with the Y axis. However, the projection of subgrid 210A shows numerous peaks 224, the spacing between which is not easily discerned. This is due to the misalignment of the columns of subgrid 210A with respect to the Y axis. The resultant projection is not useful for determining spacing between features.

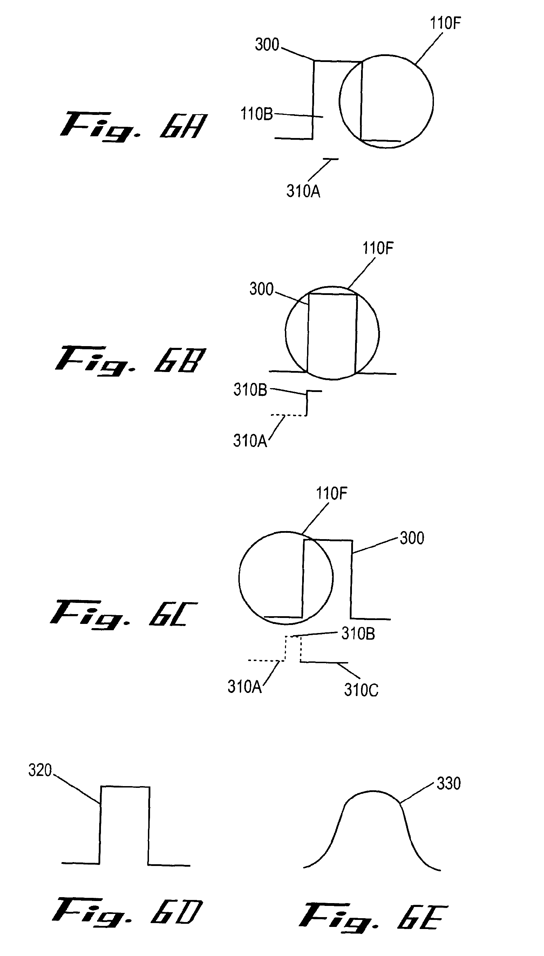

One way of dealing with this problem is to reduce the size of the features 110F. To do so, the program, according to the present system, filters the reading of the features during the projection process, by recording the minimum value within a window at each pixel position as it passes over a feature 110F. The window function has a width that is smaller than the width that the features 110F are usually produced to have. For example, features 110F may be formed to have a width of about 15 to 30 pixels, and the window used may have a width of about 7 pixels. Figs. 6A-6C show representative values taken as the window 300 moves across a feature 110F to record the minimum intensity levels during processing. At Fig. 6A, because a portion of window 300 is not yet sensing feature 100F, the minimum level will be somewhere near representative of the baseline, as indicated by plot 310A, since window 300 is still reading background 110B on the slide, and the background is generally not illuminated.

Fig. 6B shows a position of window 300 where everything that it is sensing is within the confines of feature 110F. Accordingly, the minimum illumination value sensed at this position is going to be relatively high, since the entire area of the window is illuminated. Hence, the plot 310B reflects this high reading. Fig. 6C, like Fig. 6A, shows a position of window 300 where the entire window is not reading feature 110F. Hence, the minimum illumination value will again be near baseline, as indicated by plot 310C. Although only three representative positions of window 300 are shown with respect to feature 110F, this process may record a minimum illumination value for many more loci, and may record minimum values on a pixel by pixel basis. Also, window 300 may have multiple positions where feature 110F is being read in the entire area of the window, since, as noted above, window 300 may be much narrower than the width of feature 110F.

This filtering process results in a much narrower, more well-defined peak representative of each feature 110F read. Figs. 6D and 6E illustrate the difference between a filtered peak 320 and a non-filtered peak 330. By narrowing the peaks, this results in much clearer, more well-defined peak spacing, which is easier to process for determining the feature spacing and subgrid layouts, and also prevents overlap of one column or row of features with an adjacent column or row, up to a certain extent of rotation of a subgrid. This filtering is also useful to filter out noise or spurious signals where the anomaly is less than the width of the window used.

The present invention is not concerned with determining an accurate reading of the intensity value of a feature 110F, or even of the particular shape of each feature. Rather, the process is performed for targeting the locations of the features 110F. Therefore, the logarithm of the intensity values are used during processing to curb the overall effect of the large intensity values (privilege or weight the general population of intensity values versus those which are abnormally high). This may be useful to downgrade the importance of anomalous sources of illumination which may present with higher intensity than the features.

A further refinement of projection processing may be performed to increase the signal to noise ratio of the resulting projections. This refinement involves computing projections of all of the pixels only for the first projection performed, whether it be in the Y direction or the X direction. After obtaining the first projection plot in the manner described above, the system identifies only the location where peaks representing features 110F are suspected. The locations of the peak maximums are the result of the peak-picking algorithm that has been performed in the current dimension of processing.

Once the suspected peak locations are identified in the first dimension, only those pixel lines (columns or rows) corresponding to the identified peaks (and a predetermined distance on either side of each peak (e.g., for typical feature sizes and using 10 microns pixels, about 3-8 pixels on each side, preferably about 4-6 pixels on each side) are processed for a projection in the other (X or Y direction). This not only reduces processing time, but eliminates a lot of the background noise in between the rows or columns of the features 110F which need not be processed. For example, if the first projection is in the X direction, then the identification of peaks from this first projection narrows down the rows of pixels which are to be considered. Then, when subsequently performing the projection in the Y direction, only those column values which lie in the identified row positions are considered during the projection. The same process can be applied if the first projection is done in the Y direction, wherein, when doing the subsequent X projection, only those row values which lie in the identified column positions would be considered.

Returning to the first example, after projection in the X direction, selection of peaks, and then projecting in the Y direction using only selected row positions, the projection in the Y direction can be processed as described above, to find peak centers of the features 110F (e.g., using window 320), to determine the spacing between features 110F and to determine the layout of the subgrids. Then another projection is done in the X direction using only the identified peak locations from the Y-projection to limit the column positions of the row pixels that are projected.

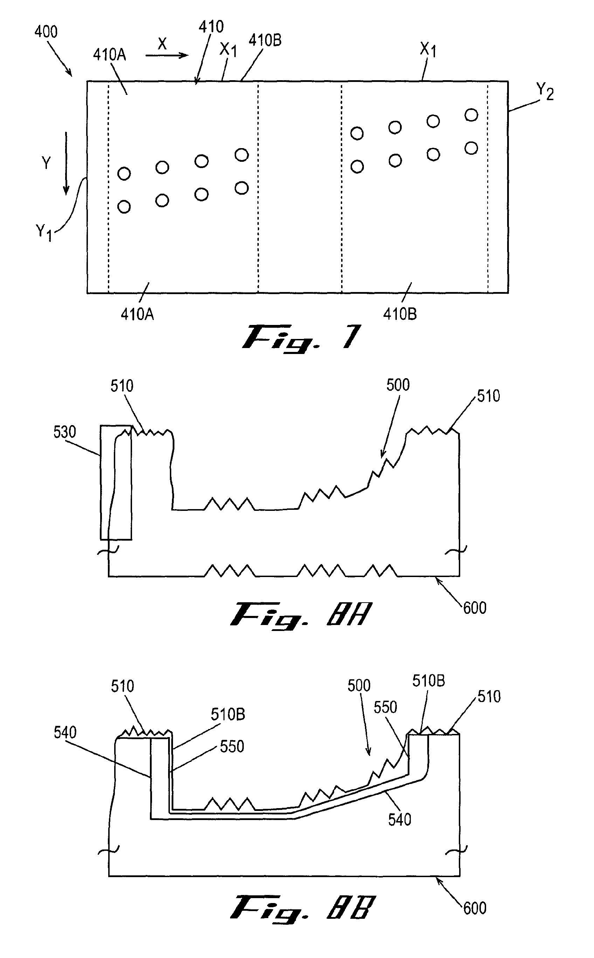

The system may further apply the process steps described above in order to determine the rotation (if any) of one or more subgrids in the array. Fig. 7 shows another example of a rotated data pattern on grid 400, wherein only two subgrids 410A and 410B are shown on the grid 400 for sake of simplicity. In order to find the rotation, the same methods are used to try to locate the positions of the features 110F. However, the process is performed separately on two different portions of the data, to determine differential data patterns (i.e., locations of features 110F). In the example shown, projections and further processing are performed on the first portion (which could be a quarter or other predetermined fraction of the data set) 410A and last portion (which is generally equal to the portion against which it is to be compared, e.g., a quarter or other predetermined fraction) 410B.

The location patterns of features 110F of each of these portions is then compared to determine the offset, in both the X and Y directions. Using the offset values, the degree of rotation can be readily calculated. For example, in Fig. 7, the processing determines that portion 410A contains a 2 x 4 subgrid with an origin of the subgrid at Y position $y_1$. Similarly, the processing determines that portion 410B contains a 2 x 4 subgrid with an origin Y-position at Y position $y_2$. The average X-position position of subgrid 410A is determined from the processing be $x_1$ and the average X-position subgrid 410B is determined to be $x_2$. From these values, the angle of rotation may be determined by calculating a tangent, i.e., $(y_2 - y_1)/(x_2 - x_1)$. The rotation is then subtracted out. Until the rotation is computed, the projections are parallel to the X and Y axes. By computing the rotations, the projections can be performed along a rotated frame, i.e., along axes that are at an angle to the X and Y axes, by an angle derived from the degree of rotation in each dimension. The first projection is generally done parallel to the shorter dimension of the scan (grid), onto the larger dimension. Only a portion of the short dimension is projected (e.g., a quarter of it, as noted above) to minimize the effect of the rotation. Once the first partial projection is performed, the rotation is computed by looking at the offset between both ends in the second dimension.

After subtracting out the rotations determined along the first dimension, processing of portions is repeated in the other dimension, in the same manner as described above. The rotational results in this dimension, combined with the rotational results in the first dimension (described in detail above) determine the skew of the pattern. The skew is the difference between the rotation with respect to the X and Y axes. Put another way, the skew is the rotation left in the second dimension after the image has been rotated along the value found in the first dimension. A skew pattern is caused by rotation with respect to both axes and is probably most easily described as a pattern that looks like a parallelogram that does not have right angles. By subtracting out the rotation with respect to both axes, the feature centers can be accurately located over the whole grid.

## Baseline processing

An example of baseline processing according to the present invention involves filtering sources of illumination which have a period (width) that is substantially greater (e.g., twice, or some other predetermined multiple) than the width (or expected width) of the peak spacing (i.e., distance between centers of the features 110F. The predetermined multiple may vary depending upon how much information is known about the grid prior to processing. For example, if no information is known, the predetermined multiple may be about twice the expected peak spacing. If the peak spacing has already been specified prior to processing, the predetermined multiple may be about 1.5 times the peak spacing, or even equal to the peak spacing. In one example where no information is known, a window spacing of 31 points (pixels) is used (assuming pixel size of 10 microns).

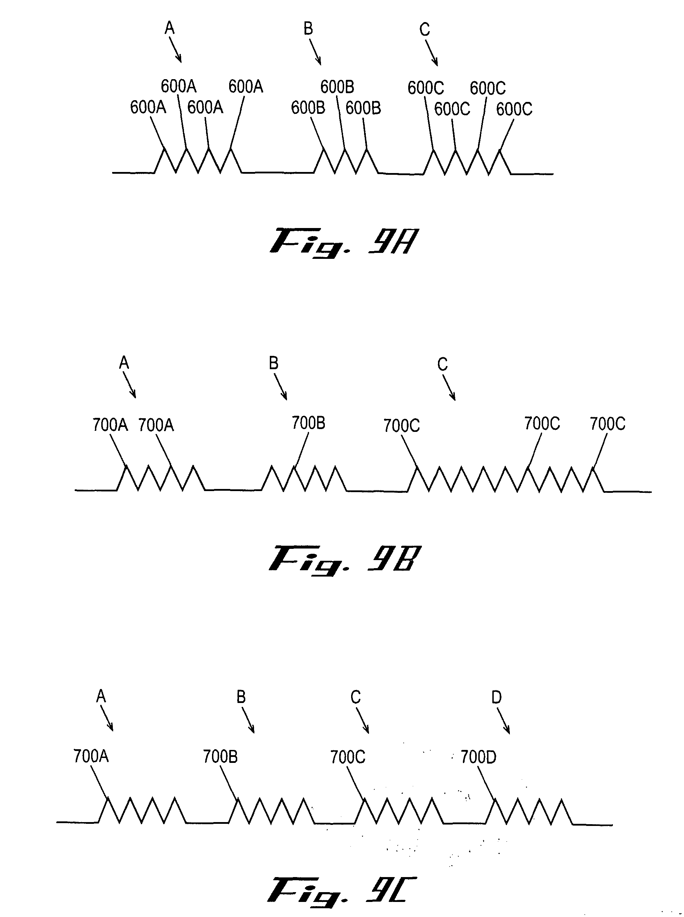

This baseline filtering process may employ a window function that operates conceptually similarly to the window function used for reducing the peak size, as discussed above with regard to Figs. 6A - 6C. Referring now to Fig. 8A, a projection 500 is schematically shown, prior to baseline filtering. Beneath projection 500, a filtered projection 600 is shown which has the baseline reduced to somewhere around a zero background level. The baseline of projection 500 in this example includes very high intensity blocks 510 such as which can be caused by a gasket seal mark left on the slide. The entire baseline is biased substantially above the zero background level, and portion 520 has a baseline with an increasing slope.

As noted above, the window 530 for the window function is selected to be no smaller than the peak spacing or expected peak spacing, and is generally about 1 to 2.5 times the peak (or expected peak) spacing. As the window 530 is passed over the projection 500, the minimum value observed in the window is obtained for each progressive position of the window 530 over the projection 500. Window 530 may be advanced by as little as one pixel between each position for which a minimum value is obtained, or a larger incremental movement may be employed for faster processing. However, by performing the projections as noted, this typically reduces the number of points to consider to somewhere in the neighborhood of about 6000. With this reduction, it is possible to advance one pixel at a time and still complete the processing very quickly, as the reduced information for the entire grid (array) can be loaded into a processor cache. Fig. 8B shows a plot 540 constructed from the minimum values obtained as window 530 passes over the entire projection plot 500. If plot 540 is subtracted from plot 500 the result is a projection plot with a baseline much closer to the zero luminance line that is desired, with the exception of the block portions 510B that are not captured by the first window filtering process.

To remove the remnant block portions 510B, a reverse transformation is employed, wherein maximum values of plot 540 are obtained using the same window function. The plot 550 resulting from the maximum value filtering step is also shown in Fig. 8B. Curve 550 approximates the projection curve much more closely than curve 540, as can be seen. By subtracting curve 550 from curve 500 a very effective filtering of the baseline is accomplished, approximating curve 600.

**Peak Width Measurement and Gaussian Fit**

When finding the peak centers as described above with regard to Fig. 3, a rather conservative window (e.g., a relatively narrow window on the order of about 11 pixels (center plus five pixels on each side), although a smaller window as small as 7 pixels may be used) may be used to find the peak centers. While this approach is useful for finding peak maxima and peak centers, it may not be very accurate for computing peak widths, as the relatively narrow window will not capture enough of the peak width of a relatively wide peak, since the window is not wide enough to do this.

Accordingly, once the peak spacing has been determined by locating the peak centers using the relatively narrow window, processing may be returned for iterations on finding a Gaussian fit, for a more accurate fit. Since the spacing is now known, a window which is about half the peak spacing can be used to do the Gaussian integration to fit the Gaussian curves for the peaks.

**Grouping the Peaks**

After the peak centers, peak spacing and peak widths have been established, according to the above methods, the system further processes the data to establish peak grouping. Peak grouping relates to the features as they are arranged in subgrids, for example. In certain situations, a consistent repeating pattern of peak grouping may be observable in the data, while one or more such groups may deviate slightly from the established pattern. For example, Fig. 9A shows a repeating pattern of four peaks consistently spaced, with each group being relatively consistently spaced by a larger distance than the distance between peaks within the group. The peaks 600A and 600C in groups A and C fit this pattern well. However, group B shows only three peaks 600B and is spaced somewhat further from group A than it is from group C. The program, in this type of situation, recognizes the established pattern of groups, the group spacing and the peak spacing. By comparing the average group spacings over the entire data set, and comparing this with the group spacing and number of peaks in group B as compared with the other groups, group B will be arranged to account for the missing peak (first peak in the group in this instance) to maintain proper alignment of this group with the other subgrids.

Another anomalous situation that may occur is like that shown in Fig. 9B. In this situation, there is again a regular pattern of four peaks established in most groups, such as shown by groups A and B, and each group is regularly spaced. However, group C shows nine peaks 700C. In this case, the program compares the peak spacings in group C with the other groups' peak spacings, and considers whether group C can be broken down into two groups while maintaining the established peak spacing and group spacing. In this example, the fifth identified "peak" was likely caused by noise of a form discussed above. By eliminating the fifth peak, the system determines that group C can actually be represented as two groups (i.e., groups C and D, as shown in Fig. 9C) and that this representation fits the established number of peaks per group as well as the established group spacing. Hence, the system filters out the fifth peak 700C and represents what was group C as new groups C and D, each containing four consistently spaced peaks and each having consistent group spacing.

An example of a process which was determined to perform well for microarray images containing features with varied sizes and geometries is as follows:

A projection along the smaller dimension of the microarray (which was usually the sum of the columns) was performed. The sum (i.e., projection) was peak picked , and then a non-linear projection along the other dimension (usually, the rows) was performed, based on the picked peaks. The non-linear projection was then analyzed. Analyzing is meant to include any or all of: performing large trace removal, Gauss filtering (Gaussian peak fitting), zero rank filtering, peak picking with arbitrary width integration ( in these examples, five points (pixels) on each side of the peak), estimating peak spacing, redoing the Gaussian peak fitting using a width of half the estimated peak spacing on each side of the peak center, block finding, block size estimating, block fixing, recomputing and validating peak spacing and block spacing using peaks in valid blocks (i.e., those block which did not need block fixing), and estimating the origin of the pattern of blocks using all valid blocks.

After analyzing, the number of zones and number of features are located ("filled in") on the grid in the first dimension (usually X axis). Next, a non-linear projection was performed along the smaller dimension was performed, based on the picked peaks in the larger dimension, wherein only even numbered picked peaks were used. This projection was then analyzed, and then the number of zones and number of features are located ("filled in") on the grid in the second dimension (usually Y axis) to give the packed array offset information.

Once all of the subgrids have been located, processing was carried out as above, individually on each subgrid. Additionally, processing to determine rotation and skew, if any were carried out on the subgrids, in the manner described above.

While the present invention has been described with reference to the specific embodiments thereof, it should be understood by those skilled in the art that various changes may be made and equivalents may be substituted without departing from the true scope of the invention. In addition, many modifications may be made to adapt a particular situation, material, composition of matter, process, process step or steps, to the objective scope of the present invention. All such modifications are intended to be within the scope of the claims appended hereto.

**Claims**

1. A method of determining a layout of features on a microarray (110), said features being provided in a two-dimensional array, the two dimensions being referenced to X and Y axes; said method comprising the steps of:

   projecting the two dimensional array in a first of the two dimensions to form a one dimensional dataset (120) representative of the values in the first dimension;
   peak picking the one dimensional dataset and determining which picked peaks (137) to retain for further processing, based on predetermined peak height and peak width thresholds;
   estimating spacing between the features based on a statistical determination of a most frequent distance between centers of retained peaks which are adjacent one another;
   projecting the two dimensional array in the second of the two dimensions to form a one dimensional dataset (130) representative of the values in the second dimension;
   peak picking the one dimensional dataset representative of the values in the second dimension, and determining which picked peaks (137) to retain for further processing, based on predetermined peak height and peak width thresholds;
   estimating spacing between the features based on a statistical determination of a most frequent distance between centers of retained peaks which are adjacent one another; and
   generating coordinates for the features (110F) on the array (110), relative to the X and Y axes, based on the picked peaks and peak spacing.

2. The method of claim 1, further comprising block finding from the sets of picked peaks, to determine layouts of subgrids (110A, 110B) of features (110F) on the microarray (110).

3. The method of claim 2, further comprising block size computing, based on a block size that accounts for the most number of picked peaks (137, 142, 144, 146, 148, 150) with blocks determined by said block finding.

4. The method of claim 3, further comprising block fixing to filter out spurious noises or account for missing features so as to fit a nonconforming block size with the computed block size.

5. The method of any preceding claim, further comprising applying a smoothing function to at least one of the projections (120, 130) to filter out minor points (136) having a higher frequency than the peaks (132) representing features (110F).

6. The method of any preceding claim, wherein said peak picking comprises analyzing an interval around each local maximum in each projection, fitting a Gaussian curve (136) in each interval, based on the interval and the local maximum, and finding a peak center (137) of the interval, based on the local maximum value and the Gaussian curve (136), using a centering algorithm, and statistically processing the Gaussian curves (136) to filter out those curves most likely to be representative of noise.

7. The method of any preceding claim, wherein said projecting in at least one of the two dimensions comprises non-linear projecting.

8. The method of any preceding claim, wherein said projecting in the second of the two dimensions comprises projecting based on orthogonal projection.

9. The method of claim 8, further comprising alternatively iterating projections based on orthogonal projection, starting with projecting in the first dimension based on the projecting based on orthogonal projection in the second dimension recited in claim 8.

10. The method of any preceding claim, further comprising performing said projections in the first and second dimensions with respect to two distinct portions of the features on the microarray, locating positions of features in both of the two distinct portions, comparing the positions between the two distinct portions to determine offset ($y_2$, $y_1$, $x_2$, $x_1$) between features, and calculating a rotation of the layout of the features with respect to one of the X and Y axes, based on the offset.

11. The method of claim 10, further comprising transforming the direction of at least one of the first and second dimensions, based on the calculated rotation, and again performing said projections in the first and second dimensions with respect to the two distinct portions of the features on the microarray, locating positions of features in both of the two distinct portions, comparing the positions between the two distinct portions to determine offset between features, and calculating a rotation of the layout of the features with respect to the second of the X and Y axes, based on the offset, from which skew of the features is determined.

12. The method of any preceding claim, further comprising baseline processing the projections.

13. A method comprising forwarding a result obtained from the method of any of claims 1-12 to a remote location.

14. A method comprising transmitting data representing a result obtained from the method of any of claims 1-12 to a remote location.

15. A method comprising receiving a result obtained from a method of any of claims 1-12 from a remote location.

16. A system for determining a layout of features on a microarray (110), said features being provided in a two-dimensional array, the two dimensions being referenced to X and Y axes; said system comprising:

   means for projecting the two dimensional array in first and second dimensions to form two one-dimensional datasets (120, 130) representative of the values in the first and second dimensions;
   means for peak picking the one dimensional datasets and determining which picked peaks (137) to retain for further processing, based on predetermined peak height and peak width thresholds;
   means for estimating spacing between the features based on distances between centers of picked peaks which are adjacent one another; and
means for generating coordinates for the features on the array, relative to the X and Y axes, based on the picked peaks and peak spacing.

17. The system of claim 16, further comprising means for block finding from the sets of picked peaks, to determine layouts of subgrids of features on the microarray.

18. The system of claim 17, further comprising means for block size computing, based on a block size that accounts for the most number of picked peaks with blocks determined by said means for block finding.

19. The system of claim 18, further comprising means for block fixing to filter out spurious noises or account for missing features so as to fit a nonconforming block size with the computed block size.

20. The system of any of claims 16 to 19, further comprising means for non-linear projecting the two-dimensional array in at least one of the two dimensions.

21. The system of any of claims 16 to 20, further comprising means for projecting based on orthogonal projection.

22. The system of any of claims 16 to 21, further comprising means for projecting in the first and second dimensions with respect to two distinct portions of the features on the microarray; means for locating positions of features in both of the two distinct portions; means for comparing the positions between the two distinct portions to determine offset between features; and means for calculating a rotation of the layout of the features with respect to one of the X and Y axes, based on the offset.

23. The system of any of claims 16 to 22, further comprising means for baseline processing the projections.

24. A computer readable medium carrying one or more sequences of instructions for determining a layout of features (110F) on a microarray (110), said features being provided in a two-dimensional array, the two dimensions being referenced to X and Y axes, wherein execution of one or more sequences of instructions by one or more processors causes the one or more processors to perform any or all of the steps recited in claims 1-12.

Fig. 1A

Fig. 1B

Fig. 1C

*Fig. 2A*

*Fig. 2B*

*Fig. 3*

*Fig. 4A*

*Fig. 4B*

*Fig. 5*

Fig. 6A

Fig. 6B

Fig. 6C

Fig. 6D

Fig. 6E

400

410A  X  410  X₁  410B  X₁  Y₂

Y

Y₁

410A  410B

*Fig. 1*

510  500  510

530

*Fig. 8A*  600

510  500  510B  510

540  510B  550

550  540

*Fig. 8B*  600

A          B          C
600A   600A      600B      600C   600C
600A     600A     600B    600B    600C     600C

*Fig. 9A*

A          B          C
700A   700A      700B      700C      700C   700C

*Fig. 9B*

A          B          C          D
700A          700B          700C          700D

*Fig. 9C*